# EUROPEAN PATENT SPECIFICATION

(11) **EP 3 308 741 B1**
(45) Date of publication and mention of the grant of the patent: **26.02.2020**
(21) Application number: 17195580.0
(22) Date of filing: 10.10.2017
(51) Int. Cl.: A61C 15/04, A46B 5/00

(54) **ORAL CARE TOOL APPARATUS**
MUNDPFLEGEWERKZEUGVORRICHTUNG
APPAREIL D'OUTIL D'HYGIÈNE ORALE

(30) Priority: 14.10.2016 GB 201617483
(43) Date of publication of application: 18.04.2018
(73) Proprietor: Peri-dent Ltd, London EC4N 6AF (GB)
(72) Inventor: Oberholzer, Mark, Selkirkshire, TD1 3AF (GB)
(74) Representative: Swindell & Pearson Limited

(56) References cited:
- CN-U- 201 658 428
- DE-U1-202006 016 793
- GB-A- 2 474 061
- US-A- 5 394 584
- US-A- 5 673 453
- US-A1- 2007 044 815

## Description

### TECHNOLOGICAL FIELD

Examples of the present disclosure relate to an apparatus for use in an oral care tool. Some examples, though without prejudice to the foregoing, relate to an oral care tool head for use with a handle to provide an oral care tool. Some examples related to a handle for use with an oral care tool head to provide an oral care tool. In certain examples, the oral care tool is a dental flosser device.

### BACKGROUND

Conventional flossing tooling, sometimes referred to as "flosser" or "floss picks", are typically one piece products of a relatively small size configured as single-use disposable products. Alternatively, conventional flossing tooling may comprise long-handled products with detachable heads wherein the handle is configured to be reused and the heads may be replaced as and when required. Such typical flosser tools are not always optimal. It is useful to provide flosser tooling with improved adjustability and a simple assembly of a two-part flosser tool.

US2007/0044815 A1 discloses a swivel flosser comprising: a handle portion which is used to hold the flosser, a head portion which grasps the dental floss and has a u shaped configuration. The dental floss is part of the head portion. The head and the handle can be assembled by the user, once assembled together the head can rotate with respect to the handle allowing the user to clean the front teeth, the molars and everything in between. The head and handle can be assembled together by snapping a loop end of the handle around a cylindrical end of the head.

US 2007/0044815 discloses a swivel flosser comprising a handle portion and a head portion in a U shaped configuration holding a dental floss, the head and the handle have each interlocking means so that they can be assembled, once assembled together the head can rotate with respect to the handle.

US 5 673 453 discloses a toothbrush including a bristle head and an elongated handle. The bristle head has an elongated shaft extending therefrom, and an engagement rib formed axially on an external surface of the shaft. An upper portion of the handle has an axial hole which forms an opening in a top end of the upper portion, a radial hole that extends radially therethrough in communication with the axial hole and that forms a mouth at a circumferential wall of the upper portion, and an axial slit that extends along the circumferential wall from the opening to the mouth such that the axial hole is also opened laterally through the axial slit. The handle is made of a material which enables a snug-fit connection of the shaft in the axial hole or the radial hole via the opening or the mouth, when the shaft and the engagement rib on the bristle head are inserted respectively into the axial hole and the axial slit in the handle, or into the radial hole and the axial slit in the handle.

US 5 394 584 discloses a retaining member on a handle for the exchangeable attachment of an interdental brush exhibiting a fastening element with transverse element has a recess which is designed so that the interdental brush can be introduced in the direction of its longitudinal axis, with the transverse element leading, into the recess and can be locked in place in the latter especially by being folded over.

DE 20 2006016793 U1 discloses a toothbrush having a bristle carrying head with a short neck and a separate handle. The rear end of the neck comprises a swivel bearing for the front end of the handle. The front of the handle is forkshaped in order to be engaged with a stick at the neck serving as a rotation axis. The bristle head can be laterally adjusted to the handle in an angle and locked by inserting small projections located at the neck into complementary recesses at the handle.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

The present invention is as set out in independent claim 1.

According to at least some examples of the disclosure there is provided an oral care tool head for use with a handle to provide an oral care tool, the oral care tool head comprising interlocking means for detachably securing the oral care tool head to a complementary interlocking means of a handle, wherein the interlocking means is configured to slidably engage with the complementary interlocking means, and is further configured such that, when slidably engaged with the complementary interlocking means, the interlocking means is rotatable with respect to the complementary interlocking means into a fixed position.

According to at least some examples of the disclosure there is provided a handle for use with an oral care tool head to provide an oral care tool, the handle comprising interlocking means for detachably securing the handle to a complementary interlocking means of an oral care tool head, wherein the interlocking means is configured to slidably engage with the complementary interlocking means, and is further configured such that, when slidably engaged with the complementary interlocking means, the interlocking means is rotatable with respect to the complementary interlocking means into a fixed position.

According to at least some examples of the disclosure there is provided an oral care tool comprising the above oral care tool head and handle.

According to at least some examples of the disclosure, the oral care tool is a dental flosser.

According to at least some examples of the disclosure there are provided examples as claimed in the appended claims.

### BRIEF DESCRIPTION OF THE DRAWINGS

For a better understanding of various examples of the present disclosure that are useful for understanding the detailed description and certain embodiments of the invention, reference will now be made by way of example only to the accompanying drawings in which:
Figure 1 schematically illustrates an oral care tool head and a handle for the same;
Figure 2 schematically illustrates the oral care tool head of Figure 1 when interlocked with the handle;
Figure 3 schematically illustrates another oral care tool head interlocked with a handle;
Figure 4 schematically illustrates an interlocking member of a handle; and
Figures 5A and 5B schematically illustrate the handle of Figure 4 in use with an oral care tool head.

The Figures are not necessarily to scale. Certain features and views of the Figures may be shown schematically or exaggerated in scale in the interest of clarity and conciseness. For example, the dimensions of some elements in the Figures may be exaggerated relative to other elements to aid explication. Similar reference numerals are used in the Figures to designate similar features. For clarity, all reference numerals are not necessarily displayed in all Figures.

### DETAILED DESCRIPTION

The Figures schematically illustrate an oral care tool head 100a for use with a handle 100b to provide and oral care tool 200. The oral care tool head 100 comprising interlocking means 101a for detachably securing the oral care tool head 100a to a complementary interlocking means 101b of the handle 100b. The interlocking means 101 a is configured to slidably engage with the complementary interlocking means 101b, and is further configured such that, when slidably engaged with the complementary interlocking means 101b, the interlocking means 101a is rotatable with respect to the complementary interlocking means 101b into a fixed position 103n.

Without limiting the scope of the claims, an advantage/technical effect of some examples of the present disclosure is to provide an oral care tool head and handle which may be simply assembled to provide a two-part oral care tool device wherein the oral care tool head is slid into position with respect to the handle and then rotated into a fixed position, thereby providing a two part "slide and rotate to lock" assembly process. In certain examples, the interlocking means of the oral care tool head and the handle may be configured such that the interlocking means of the oral care tool head and the handle may be rotatable with respect to one another so as to provide a plurality of fixed positions. This enables the oral care tool head to be secured in one of several fixed and stable positions/orientations with respect to the handle, thereby providing multiple possible fixed angles between the head and handle which may be user selectable to facilitate operation of the oral care tool in use. Thus, certain examples may provide an oral care tool with a moveable and detachable oral tool head.

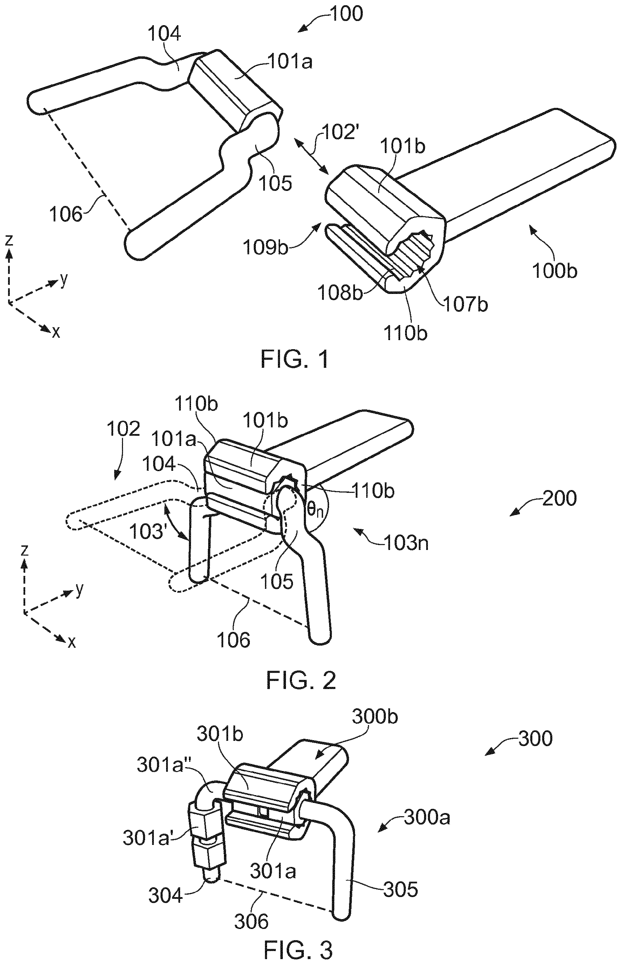

Figure 1 shows an oral care tool head 100a. In this particular example, the oral care tool head comprises a dental flosser head. However, in other examples, heads for other oral care tools may be provided, not least for example instead of a floss head, there could be an interdental brush head, an orthopaedic brush or orthopaedic mirror.

The oral care tool head comprises interlocking means 101a that are configured to detachably secure the oral care tool head to a complementary interlocking means 101b of a handle 100b. The interlocking means 101a provide a fitment/fixing mechanism, mating member and/or interconnecting means for detachably securing and locking the oral care tool head to the handle. The interlocking means 101a is configured to slidably engage with the complementary interlocking means 101b of the handle, i.e. such that the interlocking means 101a is inserted into and received by the complementarily shaped interlocking means 101b such that the oral care tool head is placed in a first/provisional mating condition with respect to the handle. Such a mating condition, in which interlocking means 101 a is slidably engaged with the complementary interlocking means 101b, is shown in outline with reference to 102 of Figure 2. In such a condition, the oral care tool head is held in position with respect to the handle via the interlocking means and complementary interlocking means such that the oral are tool head is prevented from translational movement in a direction orthogonal to the direction of slidable engagement (i.e. in the example shown, the oral care tool head is prevented from translational movement along a Y axis or Z axis when in the slidably engaged/provisional mating condition 102 but could continue slide along the X axis). In order to prevent such further sliding along the X axis, the interlocking means 101 a is rotatable with respect to the complementary interlocking means 101b.

Furthermore, the interlocking means 101 a and complementary interlocking means 101 b are configured so as to provide at least one fixed/stable/locked position of the interlocking means with respect to the complementary interlocking means upon rotation, i.e. providing a second/fully mated condition in which the interlocking means and complementary interlocking means are not freely rotatable with respect to one another but are held in a fixed/locked stable mated condition. Such a fixed/locked stable mated condition may be provided via a latching/detent type mechanism formed via appropriate configuration of the external cross sectional shape of the interlocking means 101a and the internal cross sectional shape of the complementary interlocking means 101b, i.e. wherein one or more edges of the interlocking means 101 a are retained in one or more furrows/grooves of the complementary interlocking means 101 b.

The interlocking means 101a of the oral care tool head may comprise a shaft/axel-like portion, defining an axial direction, having a polygonal cross-sectional shape. The complementary interlocking means 101b of the handle may shaped so as to at least partially enclose the shaft/axel like portion and may comprise a cylindrical portion whose internal cavity is configured to receive the interlocking means 101 a of the oral care tool head, i.e. such that the shaft/axel-like portion of the interlocking means 101a may be slid in the axial direction so as to be inserted into the hollow void of the cylindrical portion of the complementary interlocking means of the handle.

An internal surface 108b of the interlocking means 101b of the handle 100b may be configured such that, in use, when the shaft-like interlocking means of the oral care tool head is inserted into and received by the interlocking means 101b of the handle, upon rotation of the interlocking means 101 a with respect to the interlocking means 101b, the two interlocking means may be secured in a fixed position with respect to one another. For example, the cross-sectional shape of the hollow void cavity 107b of the handle 100b may be configured and dimensioned so as to receive the cross-sectional shape of the interconnecting means of the oral care tool head and the internal surface of the interconnecting means 101b of the handle may be further configured, for example corrugated and/or provided with ridges and furrows/grooves, to enable rotation of the angular cross-sectional shape of the locking means 101a within the locking means 101b and provided with particular variation of cross-sectional shape that tightly engages with the angular corners/edges of the cross-sectional shape of the interlocking means 101 a upon rotation and may provide stable orientations of the interlocking means 101 a within the interlocking means 101b thereby providing a particular position in which the oral care tool head is secured in a fixed position with respect to the handle. Such fixed/locked positions may be configured so as to enable user engagement into such fixed/locked positions so that the oral care tool head is secured in a sufficiently fixed/stable position with respect to the handle so as to ensure that the tool head does not move with respect to the handle during use, such as during a dental flossing operation, but can be user disengageable to enable the repositioning and/or removal of the tool head from the handle.

In certain examples, the interlocking means of the tool head and handle may be configured such that they provide a plurality of fixed locked/stable positions such that the oral care tool head may be provided in a plurality of angles/orientations with respect to the handle. In some examples, this may be provided by the interlocking means 101a of the oral care tool head comprising a shaft (defining an axial direction) having a polygonal cross-sectional shape, for example a cross-sectional shape of a cyclic polygon and/or a: triangular, square, pentagonal, hexagonal, heptagonal, octagonal, nonagonal, decagonal...or other N sided cross-sectional shapes. The corresponding "female" connecting means of the handle that corresponds to such a "male" polygonal cross-sectional shape male interconnecting means of the oral care tool head may be configured such that its internal cross-sectional hollowed shape may have a cross-sectional shape that corresponds to that of the interconnecting means 101a and also provided with further corrugations/ridges and furrows that enable rotation of the interconnecting means 101a within the interconnecting means 101b.

The interior surface of the interconnecting means 101b is configured such that, upon on rotation of the interconnecting means 101a within the interconnecting means 101 b, the tightness of fit of the interconnecting means 101 a within the interconnecting means 101b gradually increases until rotation to a rotation angle at which a fixed/stable position is provided. At such an angle of rotation, (i.e. such as a particular angle θ) the interconnecting means 101a is held secure in position and orientation with respect to the interconnecting means 101b of the handle. The interconnecting means 101a and interconnecting means 101b may be configured so as to provide a plurality of such fixed positions 103n providing multiple angles θn of the oral care tool head with respect to the handle such that the user can adjust the orientation of the oral care tool head with respect to the handle into one of a plurality of angles.

The oral care tool head 100a may comprise at least one arm configured such that, in use, when the interconnecting means 101 a is slidably engaged and rotated with respect to the complementary interlocking means 101, the at least one arm is configured to restrict further sliding of the interlocking means 101a with respect to the complementary interlocking means 101b. As shown in Figure 1, the interconnecting means 101b of the handle 100b may take the form of a cylinder having a longitudinal gap 109b along its length. The gap may be dimensioned so as to allow an arm 105 of the oral care tool head to slide through the interlocking means along the gap, and dimensioned so that that shaft/axel like portion of the interlocking means 101a cannot pass through the gap. The interlocking means 101b may effectively provide an elongate jaw within which the interlocking means 101 a can be slid/inserted into and through which the arms of the oral care tool head (which extend from the interlocking means 101 a) can pass through and slide along the gap 109b of the interlocking means 101b of the handle 100b.

Having undergone the slidable insertion (as indicated by arrow 102') and when in the slidably engaged configuration (shown in outline in Figure 2 with reference to 102), upon rotation of the oral care tool head (as indicated by double-headed arrows 103'), the arms 104 and 105 of the oral care tool head are rotated out of alignment with the gap such that they form an abutting surface against end side walls of the interlocking means 101b, preventing any further lateral sliding movement (i.e. in the positive or negative X direction). For example as shown in Figure 2, the arm 104 which extends in a direction perpendicular to that axial direction of the shaft-like member of the interlocking means 101a would abut against a side wall 110b of the cylindrically shaped interlocking means 101b when in the rotated and fully mated condition shown in Figure 2, thereby preventing any further sliding movement 102' in the positive X direction. In certain embodiments, such as shown in Figure 2, the oral care tool head comprises two arms, the other arm 105 extending from a second side of the interlocking means 101a wherein, in the slidably engaged and rotated configuration 103n shown in Figure 2, the second arm 105 likewise prevents further sliding of the interconnecting means 101 a in a negative X direction via the arm 105 abutting against an opposing side wall of the interconnecting means 101b of the handle.

The first and second arms may be configured for supporting/holding an interdental space cleaning element therebetween, for example, dental floss, a yarn or tape may be moulded, fastened or otherwise attached to the distal ends of the arms.

The first arm 104 may extend from a first end of the interlocking means 101a and the second arm may extend from a second end of the interlocking means, such extending arms extending generally in a direction perpendicular to the axial direction of the interlocking means 101 a so as to form a generally "U" shaped oral care tool head.

Figure 3 shows a further example of an oral care tool 300 wherein the oral care tool head 300a, in addition to comprising a first interlocking means 301a further comprises another interlocking means 301a'. The further interlocking means 301a' is provided at a different location and/or different orientation to that of the first interlocking means 301a and may, for example, be provided on one of the first or second arms 304, 305.

The arrangement shown in Figure 3, with the first interlocking means 301a being used to securely attach the oral care tool head 300a to the handle 300b, may provide a generally "Y-shaped" flosser (where the flosser element 306 extends in a direction perpendicular to the longitudinal direction of the handle). By contrast, were the second interlocking means 301a' to be used to interlock with the interlocking means 301b of the handle 300b, such an arrangement may provide a generally "F-shaped" flosser (where the flosser element 306 extends in a direction parallel to the longitudinal direction of the handle).

Y-shaped flossers are generally designed so as to reach a user's back teeth. However, certain uses find F-shaped flossers to be more convenient, such as for cleaning the user's front teeth. The example two-part dental flosser tool of Figure 3 can be readily adapted by a user into either of an F-shape configuration or a Y-shape configuration. Furthermore, it is to be appreciated that yet further additional interlocking means may be provided at differing angles and locations, such as a corner location 301a" at a 45° angle so as to accommodate yet a further potential orientation of use for a user. Thus, advantageously, examples of the invention may accommodate various orientations of the oral care tool with respect to the handle in a single oral care tool thereby making a more versatile oral care tool.

In some examples (not shown) in addition to, or instead of the oral care tool head 300a comprising multiple interlocking means 301a, 301a' at varying locations and angles with respect to one another, the handle could comprise multiple interlocking means 301b located at varying locations on the handle and at varying angles with respect to one another. This may enable the provision of alternative configurations of an oral care tool when assembled. For example, if the handle of the embodiment of Figure 2 were additionally to comprise a further interlocking means/cylindrical portion aligned parallel to the axial direction of the handle, the attachment of the oral care tool head 106 to such a further interlocking means would provide an F-shaped dental flosser (as compared to the Y-shaped dental flosser shown in Figure 2). Examples of the present disclosure provide an interlocking mechanism for an oral care tool that enables an oral care tool head to be securely attached to a handle for the oral care tool so as to provide a two-part oral care tool that is simple, intuitive and user friendly to use. Furthermore, the two-part oral care tool is versatile in that it can be configured in a variety of configurations and angular orientations.

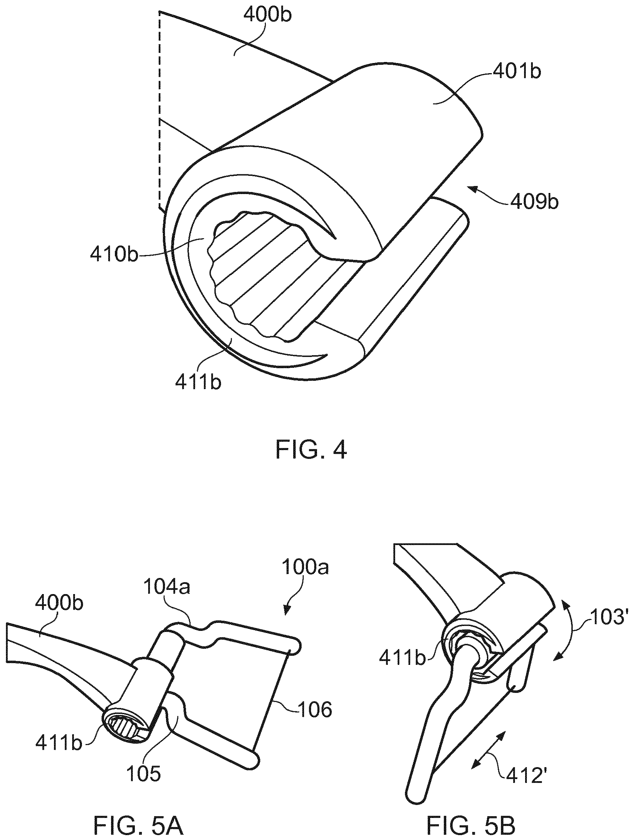

In prior two-part oral care tools, a locking mechanism would typically be based on snap fit interconnections which are reliant on the precisely engineered/dimensioned parts and also the tolerance of the moulded parts. A tight fit of the two parts may make it difficult to put together and take apart. A sub-optimal/loose fit may cause the parts to separate in the mouth while being used. Accordingly, such previous flossers require relatively high degrees accuracy dimensions of the moulded parts and thus were relatively expensive to manufacture. Since the locking mechanism of the present disclosure is not reliant on such high levels of accuracy and tolerance of the moulded parts, a wider range of polymers may be used for manufacturing the moulded parts, such as polypropylene and StyroAcryloNitrile (SAN). Figure 4 shows a detail of an interconnecting means 401b of a handle 400. In particular, a side wall 410b of the interconnecting means 401b is provided with a wedge/rib member whose dimensions and thickness gradually increase. Such a wedge member 411b is configured such that when an oral care tool head 100a is slidably engaged in the interconnecting means 401b and is then subsequently rotated (as shown with double-headed arrows 103') into one of a plurality of locked positions, the arms 104, 105 of the oral care tool head are splayed outwards from one another and forced apart via the increasing thickness of the wedge abutting the arms upon rotation of the oral care tool head with respect to the handle thereby increasing the separation distance between the arms and thus tensioning the dental floss 106 secured between the arms. Such separation of the arms and tensioning of the dental floss is figuratively shown with respect to double-headed arrows 412'.

Advantageously, the provision of such a circumferential/circular rib, such as a tapered rib gradually increasing in thickness, gives rise to a cam-like action to separate the arms of the oral care tool head upon rotation of the oral care tool head. Advantageously, such raised edges on the end of the interlocking means enable an outward pressure to be applied to the arms of the U-shaped oral care tool head. Where the oral care tool head comprises dental floss extending between the distal ends of the arms, such outward pressure on the arms increases the tension in the dental floss and thereby acts as a tensioning device.

It should be noted that certain elements and devices may not be mandatory and thus some may be omitted in certain examples of the present disclosure. For example, whilst the Figures show an oral care tool head for supporting a length of dental floss/tape/yarn, heads for other oral care tools may be provided, e.g. interdental brush, instead or in addition.

Features described in the preceding description may be used in combinations other than the combinations explicitly described. For example, whilst the examples show the oral care tool head as having a "male" type interlocking means (e.g. axial shaft) and the handle having a "female" interlocking means (e.g. cylinder for receiving the shaft, forming a holder within which the shaft may rotate into one or more fixed positions), it is to be appreciated that, in certain examples, the interconnecting means could be swapped round. I.e. in some examples the oral care tool head has one or more female interlocking means and the handle has one or more male interlocking means. Again, the male and female interlocking means are configured such that when the male interlocking means is inserted in the female interlocking means and upon rotation, the tightness of fit of the male and female interlocking means increases to one of a plurality of a stable states so as to provide a plurality of fixed interlocked states at varying orientations/angles.

Also for example, whilst the figures show the axial direction of the cylinder of the interlocking means 101b being generally perpendicular / 90° to a longitudinal direction of the handle (or at least a shank of the handle), it is to be appreciated that, in certain examples, the axial direction of the cylinder could be at positioned at other angles, not least for example 180° so as to be generally parallel the longitudinal direction of the handle as well as other angles.

Likewise, whilst the figures show the axial direction of the shaft of the interlocking means 101 a being generally parallel to the direction of extent of the dental floss (e.g. so as to prove a "Y" shaped flosser), it is to be appreciated that, in certain examples, the axial direction of the shaft could be generally perpendicular the direction of extent of the dental floss (e.g. so as to prove an "F" shaped flosser).

Also, whilst the Figures show the gap 109b of the female interlocking means 101b of the handle 100b as being provided on a side of the interlocking means 101 b that is opposite to the means at which the interlocking means is attached to the handle 100b, i.e. such that one might consider that the gap is located at an angle of 180° with respect to the handle (or at least the shank of the handle), it is to be appreciated that the gap could be provided at alternative angles, for example, the gap could be provided at an angle of 90° (such that it would be pointing in a downward direction in the Figures) or the gap may be provided at an angle of 270° (such that the gap and the mouths of the jaw was pointing in an upward direction). It is to be appreciated that the location of the gap on the female interlocking means may be provided at other angles and intermediary angles which may be selected dependent on the intended use of the oral tool care product.

Furthermore, with regards to the dental floss tensioning means shown in Figures 4, 5A and 5B, and the provision of a tapered circumferential rib-like member whose thickness gradually increases provided on a side end wall of the interconnecting means 401b, it is to be appreciated that the tapered rib-like member may instead be provided on one or more of the arms 104, 105 of the oral care tool head itself and configured such that, upon rotation of the oral care tool head with respect to the interlocking means 401b, the gradually increasing thickness of the rib member on the arms abuts against the side end walls of the interlocking means thereby creating an outward pressure on the arms and thus tensioning a dental floss/tape/yarn supported at the distal ends of the arms.

Although functions have been described with reference to certain features, those functions may be performable by other features whether described or not. Although features have been described with reference to certain examples, those features may also be present in other examples whether described or not. Although various examples of the present disclosure have been described in the preceding paragraphs, it should be appreciated that modifications to the examples given can be made, the scope of the invention being defined by the claims.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one ..." or by using "consisting".

In this description, any use of wording such as 'connect', 'couple' and 'attach' and their derivatives mean operationally connected/coupled/attached. It should be appreciated that any number or combination of intervening components can exist (including no intervening components).

In this description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some or all other examples. Thus 'example', 'for example' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are to be interpreted as "at least one" [feature, element, component, means ...] unless explicitly stated otherwise.

The examples of the present disclosure and the accompanying claims may be suitably combined in any manner apparent to one of ordinary skill in the art.

## Claims

1. An oral care tool (200) comprising:
an oral care tool head (100a) comprising: first and second arms (104, 105) for supporting dental floss therebetween, and a first interlocking means (101a) having a shaft, wherein the first arm extends from a first end of the first interlocking means and the second arm extends from a second end of the first interlocking means;
a handle (100b) comprising second interlocking means (101b), wherein the second interlocking means is configured to be complementary to the first interlocking means and comprises a cylinder whose internal cavity is configured to receive the first interlocking means of the oral care tool head, wherein the cylinder comprises a longitudinal gap (109b) along its length, the gap being dimensioned to allow at least one of the arms of the oral care tool head to slide through the second interlocking means along the gap, and dimensioned so that the shaft of the interlocking means cannot pass through the gap;
wherein the first interlocking means is configured to detachably secure the oral care tool head to the second interlocking means;
wherein the first interlocking means is configured such that, in use, when the first interlocking means is in a slidably engaged configuration with the second interlocking means, upon rotation of the oral care tool head, the arms are rotated out of alignment with the gap such that they form an abutting surface against the end side walls of the second interlocking means preventing further lateral sliding of the first interlocking means with respect to the second interlocking means;
wherein an internal surface of the cylinder is configured such that, in use when the first interlocking means is inserted in the second interlocking means, upon rotation of the first interlocking means with respect to the second interlocking means, the first interlocking means is fixedly engagable in one of a plurality of locked positions.

2. The oral care tool of any one or more of the previous claims, wherein the first interlocking means is configured such that, when in a slidably engaged condition with respect to the second interlocking means, the first interlocking means is rotatable with respect to the second interlocking means into one of a plurality of fixed positions.

3. The oral care tool of any one or more of the previous claims, wherein the first interlocking means comprises a shaft having a polygonal cross sectional shape.

4. The oral care tool of any one or more of the previous claims, wherein the oral care tool head further comprises one or more further interlocking means.

5. The oral care tool of claim 4, wherein the one or more further interlocking means is located on one or more of a first arm and a second arm of the oral care tool head.

6. The oral care tool of any one or more of the previous claims, wherein the oral care tool head comprises a dental flosser tool head, and wherein the handle comprises means for adjusting a tension of dental floss of the dental flosser tool head.

7. The oral care tool of any one or more of the previous claims, wherein a side wall of the second interlocking means comprises one or more wedge portions.

8. A two part oral care tool comprising the oral care tool of any one or more of the previous claims.

9. A dental flosser comprising the oral care tool of any one or more of the previous claims.

10. A two part dental flosser comprising the oral care tool of any one or more of the previous claims.

## Patentansprüche

1. Mundpflegewerkzeug (200), umfassend:
erste und zweite Arme (104, 105) zum Halten von Zahnseide dazwischen und ein erstes Verriegelungsmittel (101a) mit einer Welle, wobei der erste Arm sich von einem ersten Ende des ersten Verriegelungsmittels weg erstreckt und der zweite Arm sich von einem zweiten Ende des ersten Verriegelungsmittels weg erstreckt;
einen Griff (100b) umfassend ein zweites Verriegelungsmittel (101b), wobei das zweite Verriegelungsmittel so konfiguriert ist, dass sie zu dem ersten Verriegelungsmittel komplementär ist und einen Zylinder umfasst, dessen innere Kavität so konfiguriert ist, dass sie das erste Verriegelungsmittel des Mundpflegewerkzeugkopfs aufnimmt, wobei der Zylinder entlang seiner Länge einen Längs-Spalt (109b) aufweist, wobei der Spalt so bemessen ist, dass mindestens einer der Arme des Mundpflegewerkzeugkopfes durch das zweite Verriegelungsmittel entlang des Spalts gleiten kann, und so bemessen ist, dass der Welle des Verriegelungsmittels den Spalt nicht passieren kann;
wobei das erste Verriegelungsmittel konfiguriert ist, den Mundpflegewerkzeugkopf abnehmbar an dem zweiten Verriegelungsmittel zu befestigen;
wobei das erste Verriegelungsmittel derart konfiguriert ist, dass im Gebrauch, wenn sich das erste Verriegelungsmittel in einer verschieblich eingreifenden Konfiguration mit dem zweiten Verriegelungsmittel befindet, die Arme bei Drehung des Mundpflegewerkzeugkopfes außer Ausrichtung mit dem Spalt gedreht werden, so dass sie eine Anlagefläche gegenüber den Endseitenwänden des zweiten Verriegelungsmittels ein weiteres seitliches Gleiten des ersten Verriegelungsmittels in Bezug auf das zweite Verriegelungsmittel verhindernd bilden;
wobei eine Innenfläche des Zylinders derart konfiguriert ist, dass bei Verwendung, wenn das erste Verriegelungsmittel in das zweite Verriegelungsmittel eingesetzt ist, bei Drehung des ersten Verriegelungsmittels in Bezug auf das zweite Verriegelungsmittel das erste Verriegelungsmittel in eine von mehreren verriegelten Positionen fest in Eingriff bringbar ist.

2. Mundpflegewerkzeug nach einem oder mehreren der vorhergehenden Ansprüche, wobei das erste Verriegelungsmittel derart konfiguriert ist, dass das erste Verriegelungsmittel in Bezug auf das zweite Verriegelungsmittel in einem verschieblich eingreifenden Zustand in Bezug auf das zweite Verriegelungsmittel in eine von mehreren fixierte Positionen drehbar ist.

3. Mundpflegewerkzeug nach einem oder mehreren der vorhergehenden Ansprüche, wobei das erste Verriegelungsmittel eine Welle mit einer polygonalen Querschnittsform umfasst.

4. Mundpflegewerkzeug nach einem oder mehreren der vorhergehenden Ansprüche, wobei der Mundpflegewerkzeugkopf ferner ein oder mehrere weitere Verriegelungsmittel umfasst.

5. Mundpflegewerkzeug nach Anspruch 4, wobei das eine oder die mehreren weiteren Verriegelungsmittel an einem oder mehreren von einem ersten Arm und einem zweiten Arm des Zahnseidewerkzeugkopfs angeordnet sind.

6. Mundpflegewerkzeug nach einem oder mehreren der vorhergehenden Ansprüche, wobei der Mundpflegewerkzeugkopf einen Zahnseidewerkzeugkopf umfasst und wobei der Griff Mittel zum Einstellen einer Spannung der Zahnseide des Zahnseidewerkzeugkopfs umfasst.

7. Mundpflegewerkzeug nach einem oder mehreren der vorhergehenden Ansprüche, wobei eine Seitenwand des zweiten Verriegelungsmittels einen oder mehrere Keilabschnitte aufweist.

8. Zweiteiliges Mundpflegewerkzeug umfassend das Mundpflegewerkzeug nach einem oder mehreren der vorhergehenden Ansprüche.

9. Zahnseidewerkzeug, umfassend das Mundpflegewerkzeug nach einem oder mehreren der vorhergehenden Ansprüche.

10. Zweiteiliges Zahnseidewerkzeug, umfassend das Mundpflegewerkzeug nach einem oder mehreren der vorhergehenden Ansprüche.

## Revendications

1. Outil d'hygiène bucco-dentaire (200) comprenant :
une tête d'outil d'hygiène bucco-dentaire (100a) comprenant : des premier et deuxième bras (104, 105) pour supporter le fil dentaire entre eux, et un premier moyen d'emboîtement (101a) ayant une tige, dans lequel le premier bras s'étend à partir d'une première extrémité du premier moyen d'emboîtement et le deuxième bras s'étend depuis une deuxième extrémité du premier moyen d'emboîtement ;
une poignée (100b) comprenant un deuxième moyen d'emboîtement (101b), dans lequel le deuxième moyen d'emboîtement est configuré pour être complémentaire du premier moyen d'emboîtement et comprend un cylindre dont la cavité interne est configurée pour recevoir le premier moyen d'emboîtement de la tête d'outil d'hygiène bucco-dentaire, dans lequel le cylindre comprend un espace longitudinal (109b) sur sa longueur, l'espace étant dimensionné pour permettre à au moins un des bras de la tête d'outil d'hygiène bucco-dentaire de glisser à travers le deuxième moyen d'emboîtement le long de l'espace, et dimensionné de manière à ce que les moyens de verrouillage ne peuvent pas traverser l'espace ;
dans lequel le premier moyen d'emboîtement est configuré pour fixer de manière détachable la tête d'outil d'hygiène bucco-dentaire au deuxième moyen d'emboîtement ;
dans lequel le premier moyen d'emboîtement est configuré de telle sorte qu'en utilisation, lorsque le premier moyen d'emboîtement est dans une configuration engagée de manière coulissante avec le deuxième moyen d'emboîtement, lors de la rotation de la tête d'outil d'hygiène bucco-dentaire, les bras tournent hors alignement avec l'espace de telle sorte qu'ils forment une surface de butée contre les parois latérales d'extrémité du deuxième moyen d'emboîtement empêchant un glissement supplémentaire latéral du premier moyen d'emboîtement par rapport au deuxième moyen d'emboîtement ;
dans lequel une surface interne du cylindre est configurée de telle sorte qu'en utilisation, lorsque le premier moyen d'emboîtement est inséré dans le deuxième moyen d'emboîtement, lors de la rotation du premier moyen d'emboîtement par rapport au deuxième moyen d'emboîtement, le premier moyen d'emboîtement peut être engagé de manière fixe dans une position parmi une pluralité de positions verrouillées.

2. Outil d'hygiène bucco-dentaire selon l'une ou plusieurs des revendications précédentes, dans lequel le premier moyen d'emboîtement est configuré de telle sorte que, lorsqu'il est dans une configuration engagée de manière coulissante par rapport au deuxième moyen d'emboîtement, le premier moyen d'emboîtement peut tourner par rapport au deuxième moyen d'emboîtement dans une position parmi une pluralité de positions fixes.

3. Outil d'hygiène bucco-dentaire selon l'une quelconque ou plusieurs des revendications précédentes, dans lequel le premier moyen d'emboîtement comprend un arbre ayant une forme polygonale en coupe transversale.

4. Outil d'hygiène bucco-dentaire selon l'une quelconque ou plusieurs des revendications précédentes, dans lequel la tête d'outil d'hygiène bucco-dentaire comprend en outre un ou plusieurs autres moyens d'emboîtement.

5. Outil d'hygiène bucco-dentaire selon la revendication 4, dans lequel le ou les autres moyens d'emboîtement sont situés sur un ou plusieurs bras parmi un premier bras et un deuxième bras de la tête d'outil d'hygiène bucco-dentaire.

6. Outil d'hygiène bucco-dentaire selon l'une quelconque ou plusieurs des revendications précédentes, dans lequel la tête d'outil d'hygiène bucco-dentaire comprend une tête d'outil porte-fil dentaire, et dans lequel la poignée comprend un moyen pour ajuster la tension du fil dentaire de la tête d'outil porte-fil dentaire.

7. Outil d'hygiène bucco-dentaire selon l'une quelconque ou plusieurs des revendications précédentes, dans lequel une paroi latérale du deuxième moyen d'emboîtement comprend une ou plusieurs parties en coin.

8. Outil d'hygiène bucco-dentaire en deux parties comprenant l'outil d'hygiène bucco-dentaire selon une ou plusieurs des revendications précédentes.

9. Porte-fil dentaire comprenant l'outil d'hygiène bucco-dentaire selon une ou plusieurs des revendications précédentes.

10. Porte-fil dentaire en deux parties comprenant l'outil d'hygiène bucco-dentaire selon une ou plusieurs des revendications précédentes.
